# FASCICULE DE BREVET EUROPEEN

(11) **EP 1 852 225 B1**
(45) Date de publication et mention de la délivrance du brevet: **20.10.2010**
(21) Numéro de dépôt: 07356057.5
(22) Date de dépôt: 30.04.2007
(51) Int. Cl.: B25J 9/04, B25J 19/00

(54) **Structure de robot de type scara, et robot correspondant**
Roboterstruktur vom SCARA-Typ und entsprechender Roboter
Scara robot structure and corresponding robot

(30) Priorité: 02.05.2006 FR 0603898
(43) Date de publication de la demande: 07.11.2007
(73) Titulaire: STAUBLI FAVERGES, 74210 Faverges (FR)
(72) Inventeur: Palau, Joseph, 74320 Sevrier (FR); Gerat, Vincent, 74410 Saint Jorioz (FR); Sallet, Eric, 73460 Frontenex (FR)
(74) Mandataire: Schouller, Jean-Philippe

(56) Documents cités:
- EP-A1- 0 937 550
- EP-A1- 1 464 455
- JP-A- 61 293 791
- US-A1- 2005 193 854

## Description

La présente invention concerne une structure de robot de type SCARA, ainsi qu'un robot de type SCARA pourvu d'une telle structure.

De façon classique un robot de type SCARA, ou « Selective Compliance Assembly Robot Arm », comprend tout d'abord un bâti fixe, susceptible par exemple d'être posé sur une table. Il est en outre prévu un bras mobile par rapport au bâti, au moins en rotation, notamment autour d'un axe vertical.

Enfin, ce robot est équipé d'un organe, tel une bride, qui permet la réception d'un outil, qui est par exemple une pince de préhension ou un outil de meulage. Cet organe de réception de l'outil est mobile par rapport au bras précité. Ainsi, il peut tout d'abord être monté directement sur ce bras, avec possibilité de rotation.

A titre d'alternative, l'organe de réception de l'outil peut être monté sur un bras auxiliaire, qui est lui même libre en rotation par rapport au premier bras. Dans ce dernier cas, l'organe de réception de l'outil peut être fixe, ou bien mobile, par rapport au bras auxiliaire. Enfin, l'organe de réception de l'outil est prévu mobile en translation par rapport au bâti, le plus souvent selon un axe vertical.

Les robots SCARA, qui présentent de bonnes performances en termes de vitesse, de reproductibilité et de précision, sont utilisés dans de nombreuses opérations industrielles telles que le chargement et le déchargement, ou encore l'assemblage de pièces. Ce type de robot est également avantageux, par comparaison avec d'autres technologies, en ce qu'il se prête de façon aisée à l'opération d'apprentissage. Cette dernière consiste à amener manuellement l'organe de réception de l'outil, appartenant au robot, à un emplacement souhaité, puis à mémoriser cette configuration, plutôt que de la programmer.

Afin de faciliter et de sécuriser cette manipulation, il s'agit dans un premier temps, en vue de réaliser cet apprentissage, de bloquer la translation de l'organe de réception de l'outil, tout en autorisant la rotation du premier bras, ainsi que du bras auxiliaire dans l'hypothèse ou ce dernier est présent. On débloque alors, dans un second temps, l'organe de réception de l'outil en translation, ce qui permet de placer cet outil dans sa position appropriée, puis d'enregistrer cette dernière.

On connaît, par EP-A-1 525 957, un robot de type SCARA qui comprend un bâti, un premier bras mobile par rapport à ce bâti uniquement en rotation, ainsi qu'un second bras, monté sur le premier bras précité en étant libre uniquement en rotation par rapport à ce dernier. Enfin, il est prévu un arbre, formant l'organe de réception de l'outil, qui est monté sur le second bras. Cet arbre est mobile par rapport à celui-ci à la fois en rotation et en translation, grâce à l'action de deux moteurs reçus dans ce second bras.

Cette solution connue présente cependant certains inconvénients, liés en particulier à son encombrement important. Ainsi, la présence des deux moteurs dans le second bras, qui sont placés l'un au-dessus de l'autre, implique que ce second bras présente un encombrement substantiel, selon un axe vertical. Par ailleurs, l'arbre de réception de l'outil, monté sur ce second bras, fait nécessairement saillie par rapport à celui-ci, selon ce même axe. Enfin, il convient de tenir compte de la course de cet arbre, selon cette direction verticale.

Ces différentes raisons impliquent que le robot décrit dans EP-A-1 525 957 présente un encombrement notable, au moins au niveau du second bras portant l'outil, selon la direction verticale. Ceci est désavantageux, dans la mesure où cela interdit l'intégration de ce robot SCARA dans une zone de travail faiblement accessible, telle que par exemple sous une presse, ce qui réduit considérablement la polyvalence d'un tel robot.

Par ailleurs, dans l'agencement décrit dans EP-A-1 525 957, l'ensemble des fils assurant l'alimentation électrique et pneumatique de l'outil et des moteurs disposés dans les bras, s'étend du bâti vers le second bras, de façon extérieure aux capots enveloppant ces derniers. Cet ensemble de fils, encore dénommé harnais, subit par conséquent une torsion importante lors des différents mouvements du robot, ce qui fragilise considérablement les organes électriques précités.

Ce harnais, qui est protégé uniquement par une gaine, se trouve rapidement altéré dans la mesure où il est sujet à des arrachements, à une usure prématurée lors des mouvements du robot, ainsi qu'à des détériorations potentielles lorsque le robot est placé dans des atmosphères de travail agressives, par exemple corrosives ou riches en poussière. Par ailleurs, l'existence d'un harnais extérieur au capot est désavantageuse en termes d'encombrement, puisque la position du harnais est variable en fonction des mouvements du robot, de sorte que l'encombrement global de ce dernier est aléatoire.

Enfin, on notera que le second bras est équipé de trois moteurs, ainsi que des transmissions qui leurs sont associées. Ceci implique que ce second bras présente un volume nécessairement important, ainsi qu'une inertie élevée, qui est désavantageuse en termes de performances.

On connaît également, par US-A-6,199,444, un robot de type SCARA qui comprend un bâti, ainsi qu'une colonne montée de manière mobile, uniquement en translation, par rapport à ce bâti. A cet effet, celui-ci est pourvu d'un système à vis et écrou, assurant une telle translation.

En outre, un premier bras est monté mobile en rotation par rapport à celle colonne, alors qu'il est prévu un second bras, mobile en rotation par rapport à ce premier bras, ce second bras étant lui-même pourvu d'un organe de réception d'un outil, monté rotatif.

Cette solution alternative résout, dans une certaine mesure, le problème d'encombrement lié à l'enseignement de EP-A-1,525,957. En effet, étant donné que le déplacement en translation de l'outil est assuré par la colonne mobile, cet outil et son organe de réception s'étendent selon une faible dimension axiale, nettement inférieure à celle inhérente au dispositif de EP-A-1 525 957.

Cependant, US-A-6,199,444 n'apporte pas de solution en ce qui concerne la présence du harnais de fils d'alimentation. En effet, dans l'enseignement de ce document, ce harnais s'étend entre le bâti et le premier bras, de façon extérieure au capot de protection.

De plus, le robot décrit dans ce brevet américain n'est pas propre à couvrir une aire de travail de grande dimension. En effet, la présence de la colonne mobile implique que la rotation du premier bras se trouve rapidement limitée par la présence du bâti, de sorte que les mouvements du robot ne possèdent pas une grande amplitude.

Enfin, on connaît des robots de type SCARA, décrits par exemple dans JP-A-61 293691, EP-A-1 464 455 qui décrit toutes les caractéristiques du préambule de la revendication 1. Ces robots font appel à un organe creux, dans lequel s'étend partiellement le harnais évoqué ci-dessus, l'organe creux étant monté en translation par rapport au bâti à l'aide d'un système à vis et écran.

L'enseignement de ces documents permet par conséquent de résoudre, dans une certaine mesure, le problème du harnais de fils d'alimentation. En revanche, la solution qu'ils décrivent présente des inconvénients liés au nombre élevé d'organes mécaniques nécessaires à la mise en mouvement des bras du robot, qui s'accompagne d'une inertie importante en mouvement ainsi que d'un encombrement substantiel.

Ceci étant précisé, l'invention vise à remédier aux différents inconvénients de l'état de la technique évoqués ci-dessus.

A cet effet, elle a pour objet une structure de robot selon la revendication 1. Des caractéristiques avantageuses de cette structure de robot font l'objet des revendications dépendantes 2 à 21.

L'invention a également pour objet un robot de type SCARA selon la revendication 22, qui comprend une structure telle que définie ci-dessus, ainsi qu'au moins un outil propre à être rapporté, de façon amovible, sur l'organe de réception de l'outil.

L'invention sera mieux comprise et d'autres avantages de celle-ci apparaîtront plus clairement à la lumière de la description qui va suivre de deux modes de réalisation d'une structure de robot de type SCARA conforme à son principe, donnée uniquement à titre d'exemples non limitatifs et faite en référence aux dessins annexés dans lesquels :
- la figure 1 est une vue en coupe longitudinale d'une structure de robot de type SCARA conforme à l'invention ;
- la figure 2 est une vue en coupe longitudinale, illustrant des moyens de freinage d'un arbre appartenant à la structure de robot de la figure 1 ;
- les figures 2A et 2B sont des vues en coupe longitudinale, analogues à la figure 2 mais à plus grande échelle, illustrant de façon plus précise les moyens de freinage de l'arbre, dans deux positions différentes ;
- la figure 3 est une vue en coupe longitudinale, analogue à la figure 2, illustrant une variante de réalisation des moyens de freinage de l'arbre ;
- les figures 3A et 3B sont des vues en coupe longitudinale, analogues à la figure 3 mais à plus grande échelle, illustrant de façon plus précise les moyens de freinage de l'arbre, dans deux positions différentes ; et
- la figure 4 est une vue en coupe longitudinale, analogue à la figure 1, illustrant une variante de réalisation d'une structure de robot conforme à l'invention.

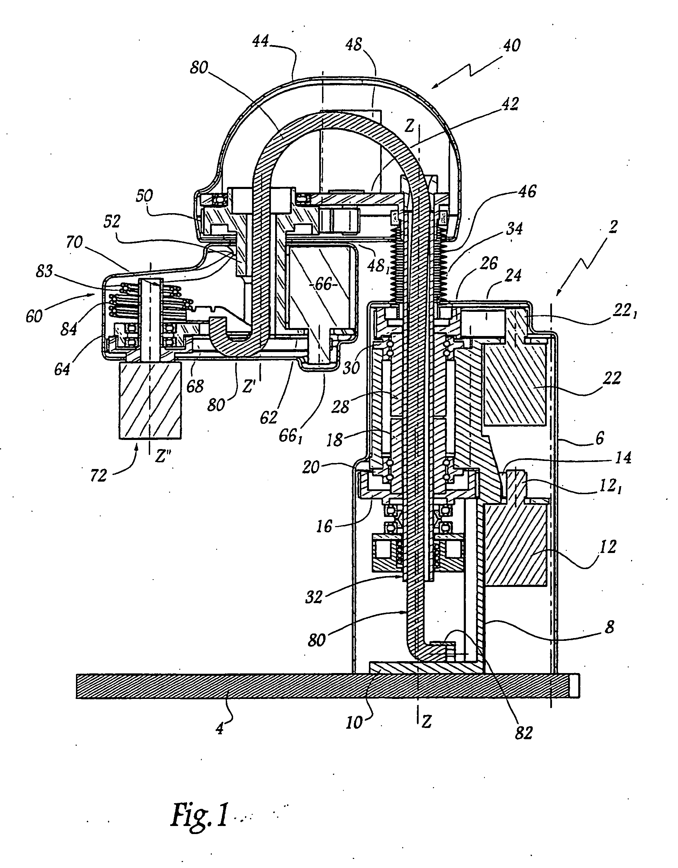

La structure de robot de type SCARA, illustrée notamment à la figure 1, comprend tout d'abord un bâti désigné dans son ensemble par la référence 2, susceptible d'être disposé sur un support de travail, qui est en l'occurrence une table 4 dont la surface supérieure est horizontale dans l'exemple illustré. Ce bâti 2 est équipé d'un capot de protection 6, à l'intérieur duquel est prévu un pied 8, dont le socle 10 repose directement sur la table précitée 4.

Ce pied 8 supporte tout d'abord un moteur 12, possédant un axe rotatif 12₁, susceptible de pivoter autour d'un axe vertical, qui est propre à coopérer avec une courroie 14, de type connue en soi. Cette dernière est propre à entraîner une couronne dentée 16, la démultiplication correspondante étant fonction du rapport de dents entre la sortie du moteur 12 et cette couronne 16.

Cette couronne 16 est par ailleurs solidaire d'une douille 18, dite glissière, dont la surface intérieure est munie de billes non représentées, qui sont disposées axialement, en référence à l'axe principal Z d'un arbre qui sera décrit plus en détail dans ce qui suit. Dans le cas d'espèce, cet axe Z est vertical, à savoir perpendiculaire au plan de la table 4. Cette douille glissière 18 se trouve guidée en rotation, tout en étant bloquée en translation, dans un palier 20 de type roulement à billes, qui est de structure classique.

Au-dessus du premier moteur 12, le pied supporte un moteur 22, présentant également un axe rotatif 22₁, propre à pivoter autour d'un axe vertical. Ce moteur 22 coopère avec une courroie 24, propre à entraîner une couronne dentée 26. Cette dernière est solidaire d'une douille à billes 28, de type écrou, dont la surface intérieure est pourvue de billes, qui sont disposées de façon hélicoïdale autour de l'axe Z précité. Un second palier 30, par exemple de type à roulement à billes, qui est fixé sur le pied 8, assure le guidage en rotation, ainsi que le blocage suivant l'axe Z, de cette douille écrou 28.

Un arbre creux 32, formant un organe de déplacement comme on le verra dans ce qui suit, est reçu dans le volume intérieur du bâti 2. Cet arbre 32, qui est placé verticalement en service, s'étend à l'extérieur du bâti 2 au travers d'une ouverture 34, ménagée dans la paroi supérieure du capot 6.

La surface extérieure de l'arbre 32 est creusée de rainures longitudinales, prévues par exemple au nombre de trois, qui s'étendent sur une majeure partie de la dimension axiale de cet arbre. Cette surface extérieure est en outre creusée d'une rainure hélicoïdale, s'étendant au moins dans la partie supérieure de l'arbre 32, de manière à coopérer avec la douille écrou 28. Ces rainures, respectivement longitudinales et hélicoïdale, qui ne sont pas représentées sur les figures, sont réalisées de façon connue en soi, par exemple conformément au mode de réalisation de l'arbre illustré dans EP-A-1 525 957.

Enfin, au voisinage de la partie basse de cet arbre, il est prévu des moyens de freinage de ce dernier, à l'égard d'un mouvement de translation selon l'axe Z, qui seront décrits plus en détail dans ce qui suit.

L'extrémité supérieure de l'arbre 32 est solidaire du corps 42 d'un premier bras 40, mobile par rapport au bâti comme on le verra plus en détail dans ce qui suit. Ce bras 40 est pourvu d'un capot de protection 44, alors qu'un soufflet 46, extensible et rétractable, assure l'étanchéité entre ce premier bras 40 et le bâti 2, notamment à l'égard des poussières extérieures susceptibles d'altérer le fonctionnement des douilles 18 et 28. Ce soufflet 46 est également de nature à améliorer la sécurité d'utilisation de l'ensemble du robot. On notera que ce soufflet peut être remplacé par un système garantissant un degré d'étanchéité élevé, compatible avec des applications en salle blanche.

Le bras 40 est par ailleurs pourvu d'un moteur 48, présentant un axe rotatif 48₁, monté pivotant autour d'un axe vertical, qui entraîne via une courroie 50 un arbre supplémentaire 52. Ce dernier présente un axe principal Z', parallèle à celui Z de l'arbre 32 tout en étant décalé par rapport à ce dernier axe.

L'arbre supplémentaire 52 est solidaire du corps 62 d'un second bras 60, également pourvu d'un capot de protection 64. Ce bras 60 est muni d'un moteur 66, présentant un axe rotatif 66₁, susceptible de pivoter autour d'un axe vertical, qui entraîne via une courroie 68 un organe 70 de réception d'un outil 72, dont est pourvu le robot conforme à l'invention. Cet organe de réception 70, de type classique, est une bride dans l'exemple illustré, alors que l'outil 72 est par exemple une pince de préhension ou un outil de meulage. On notera que, grâce au moteur 66, l'organe de réception 70 est propre à pivoter autour d'un axe Z", qui est parallèle à celui Z' de l'arbre 52, tout en étant décalé par rapport à cet axe.

Le robot conforme à l'invention intègre également un harnais 80, qui est composé de façon connue en tant que telle d'un ensemble de câbles, notamment de type électrique ou pneumatique. Ces câbles, qui assurent l'alimentation des différents éléments auxiliaires du robot, à savoir notamment de l'outil et des moteurs embarqués, sont entourés d'une gaine de protection.

A son extrémité inférieure, le harnais 80 est reçu dans un guide 82, fixé sur le socle 10 du pied 8. On notera que, selon une variante non représentée, le harnais 80 est susceptible de coulisser au travers du guide 82, de façon à compenser les mouvements du bras 40 selon l'axe vertical Z. On peut également prévoir de constituer une réserve de câbles, appartenant au harnais, qui est alimentée par exemple par un dispositif de mécanique du type dévidoir, en partie basse du bâti. Les câbles de ce harnais sont par ailleurs susceptibles d'être alimentés, depuis l'extérieur du bâti 2, par des moyens non représentés, tels qu'un contrôleur de type classique.

Le harnais 80 s'étend, à partir du guide 82, à l'intérieur de l'arbre creux 32, de façon à pénétrer dans le volume intérieur du premier bras 40. Puis, ce harnais décrit une boucle d'environ 180° et se trouve reçu à l'intérieur de l'arbre supplémentaire 52, également creux, de manière à pénétrer dans le volume intérieur du second bras 60. Certains des câbles d'alimentation, appartenant au harnais 80, sont connectés aux moteurs 48 et 66 d'une manière non représentée, connue en soi.

De plus, les câbles d'alimentation spécifiques à l'outil sont connectés à ce dernier par l'intermédiaire d'une ouverture 83, représentée de façon schématique, qui est creusée dans la bride de réception 70 de l'outil. Etant donné que cette dernière est soumise à une rotation de +/- 360°, les câbles forment un enroulement 84, s'étendant sur environ deux tours, qui pénètre dans l'ouverture précitée. Cette mesure, qui est de type classique, permet de réduire les sollicitations auxquelles sont soumis ses câbles.

On notera que l'organe 70 de réception de l'outil est logé dans le volume intérieur du second bras 60, qui est délimité par le capot de protection 64. L'ouverture 83, assurant le passage des câbles d'alimentation en direction de l'outil, est également intégrée dans ce volume intérieur, ce qui est avantageux notamment en termes de protection de ces différents câbles à l'égard des agressions extérieures.

En service, le premier bras 40 est mobile par rapport au bâti 2, à la fois en translation selon l'axe Z et en rotation autour de ce même axe. A cet effet, il s'agit de mettre en marche sélectivement l'un et/ou l'autre des moteurs 12 et 22, de manière à provoquer la rotation de l'une et/ou l'autre des douilles 18 et 28. Ainsi, ces moteurs 12 et 22 engrènent avec l'arbre 32, en vue de sa mise en mouvement en rotation et/ou en translation par rapport au bâti 2.

De façon plus précise, si l'on désire conférer à l'arbre un mouvement de translation pure, il s'agit d'actionner uniquement le moteur supérieur 22, l'autre moteur 12 étant bloqué en position, de façon à entraîner en rotation la douille à écrou 28. Le mouvement de rotation de cette douille 28, dont on rappelle qu'elle est bloquée en translation suivant l'axe Z, induit alors la translation de l'arbre 32 selon cet axe Z. De plus, si l'on désire conférer à l'arbre 32 un mouvement de rotation pure, il s'agit d'entraîner les deux douilles 18 et 28 dans le même sens de rotation, à la même vitesse de rotation.

Enfin, si l'on désire conférer un mouvement combiné de translation et de rotation à l'arbre 32, il s'agit d'entraîner les deux douilles 18 et 28 à des vitesses de rotation différentes. Dans cette optique, on peut également entraîner ces moteurs selon des sens de rotation contraires, en fonction de la nature du mouvement que l'on désire impartir à l'arbre 32.

Etant donné que, comme on l'a vu ci-dessus, l'arbre 32 est fixe par rapport au corps 42 du premier bras 40, cet arbre transmet ainsi à ce bras son mouvement de rotation et/ou de translation. Ainsi, dans la structure de robot SCARA décrite ci-dessus, non seulement l'outil 72, mais également les deux bras 40 et 60 sont mobiles en translation selon l'axe Z, par rapport au bâti 2.

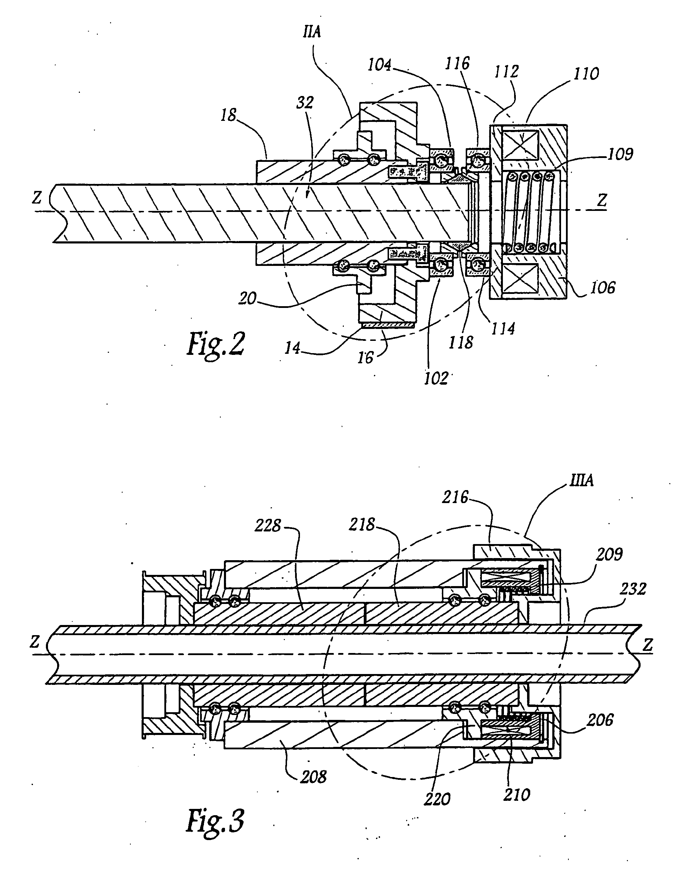

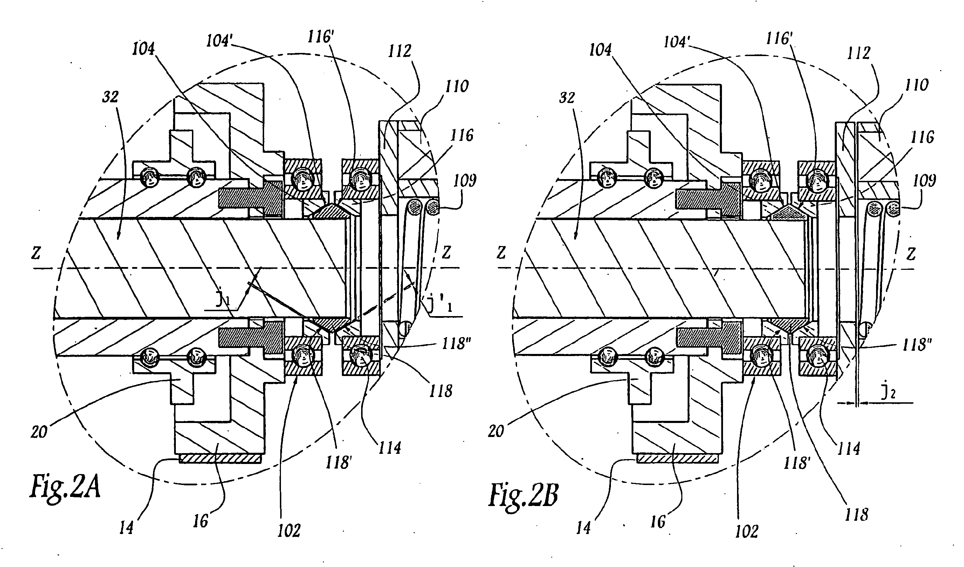

On va maintenant décrire, dans ce qui suit, une première variante de réalisation des moyens de freinage de l'arbre, à l'égard d'un mouvement de translation selon l'axe Z. Comme l'illustrent les figures 2, 2A et 2B, la couronne d'entraînement 16 est solidaire à son extrémité inférieure d'un palier, dit fixe 102, de type connu en soi, par exemple à roulement à billes. Ce palier fixe 102 supporte une bague 104, réalisée par exemple en matière métallique, qui est fixe par rapport au palier 102 en translation selon l'axe Z, mais qui est libre de tourner par rapport à celui-ci autour du même axe Z. Cette bague 104 présente une surface radiale interne inclinée 104', qui s'évase vers le bas, à savoir à l'opposé de la couronne dentée 16.

Par ailleurs, l'extrémité inférieure de l'arbre 32 est entourée par un corps 106, solidaire du pied. Ce corps 106 délimite un premier logement, radialement interne, permettant la réception d'un ressort 109 disposé immédiatement à la périphérie de cet arbre 32. Ce corps 106 définit en outre un second logement, radialement externe, destiné à la réception d'une bobine électromagnétique 110, de type connu en soi.

A l'extrémité supérieure du corps 106, c'est-à-dire tournée vers la couronne dentée 16, il est prévu une plaque annulaire 112, susceptible d'être déplacée en translation selon l'axe Z par rapport à ce corps 106. Cette translation peut être réalisée dans les deux sens, comme on le verra dans ce qui suit, selon que la plaque 112 est mise en mouvement par le ressort 109 ou la bobine 110.

Cette plaque 112 reçoit, à son extrémité opposée au corps 106, un second palier 114, analogue à celui 102 décrit précédemment. Ce palier 114, dit mobile, est solidaire d'une seconde bague 116, analogue à celle décrite 104. Cette bague 116 possède une surface inclinée 116', qui diffère de celle 104' en ce qu'elle s'évase vers le haut, à savoir en direction de la couronne dentée 16.

Il est enfin prévu une bague intermédiaire 118, réalisée de préférence en une matière plastique lui conférant des qualités de souplesse. Cette bague 118 est fendue, en ce sens qu'elle ne s'étend pas sur 360° autour de l'arbre 32. Elle est montée glissante sur cet arbre 32, de sorte que, en l'absence d'action extérieure, cette bague n'est pas de nature à affecter le libre déplacement de l'arbre. En coupe longitudinale, cette bague 118 présente deux surfaces inclinées 118' et 118" , qui sont conjuguées respectivement de celle 104' de la bague 104 et de celle 116' de la bague 116. En d'autres termes, ces deux surfaces inclinées 118' et 118" affectent, vues en coupe longitudinale, une forme de chevron.

La figure 2A illustre à plus grande échelle une position de service normal, pour laquelle il n'est pas nécessaire de freiner l'arbre à l'égard d'une translation selon l'axe Z. Dans ce cas, la bobine 110 est activée de sorte que la plaque 112, réalisée en un matériau approprié, se trouve plaquée contre cette bobine 110 et que les bagues 104 et 116 se trouvent placées à distance de la bague intermédiaire fendue 118. Dans ces conditions, il existe des jeux notés j₁ et j'₁, à la fois de type axial et radial, entre les différentes surfaces inclinées, respectivement 104' et 118', ainsi que 118" et 116'. Par conséquent, la présence des différentes bagues 104, 116 et 118 n'est pas de nature à empêcher la libre translation de l'arbre 32 selon l'axe Z, ainsi que sa libre rotation autour de cet axe. Sur la figure 2A, ces jeux j₁ et j'₁ sont accentués pour une meilleure compréhension.

Si l'on désire freiner cet arbre 32, il s'agit de désactiver la bobine 110, de sorte que le ressort 109 repousse la plaque 112, le palier 114 et la bague 116 à l'opposé de la bobine. Il existe alors un jeu, noté j₂, entre la bobine 110 et la plaque 112. Dans ces conditions, cette bague 116 se rapproche de la bague fixe 104, de sorte qu'elle tend à coincer la bague intermédiaire 118 contre cette bague fixe 104. On notera que, en cas de coupure intempestive d'alimentation électrique, cette bague intermédiaire 118 se trouve également coincée, ce qui avantageux en termes de sécurité puisque l'arbre principal et les deux bras de la structure ne retombent pas sous l'effet de la gravité.

De façon plus précise, les surfaces inclinées respectives 104' et 116' des bagues 104 et 116 exercent un effort axial sur les surfaces inclinées 118' et 118'' de la bague intermédiaire 118. Ceci se traduit également par la formation d'une contrainte radiale, dirigée vers l'intérieur, exercée sur cette bague intérieure 118. Par conséquent, cette dernière se resserre, de manière à être solidarisée par adhérence avec l'arbre 32, comme illustré à la figure 2B.

Dans ces conditions, ce dernier se trouve bloqué en translation, selon l'axe Z, par l'intermédiaire des différentes bagues 104, 116 et 118, qui se trouvent liées en translation par rapport au bâti 2. En revanche, l'arbre 32 est libre de pivoter autour de cet axe Z, du fait de la présence des paliers à roulements 102 et 114, dont les bagues internes ne sont pas montées au contact respectivement de la couronne 16 et de la plaque 112 du fait d'aménagements de formes sur les pièces 16 et 112.

Ces moyens de freinage, qui comprennent notamment les trois bagues 104, 116 et 118 décrites ci-dessus, permettent ainsi de bloquer la translation de l'arbre 32 selon l'axe Z, tout en continuant à autoriser la rotation de cet arbre autour de ce même axe. Dans ces conditions, il est possible de réaliser une opération d'apprentissage de la structure de robot de l'invention, étant donné que les deux bras 40 et 60 peuvent être déplacés en rotation par rapport au bâti 2.

Par ailleurs, le fait que l'arbre est bloqué en translation est avantageux, notamment dans la mesure où il n'est pas nécessaire pour l'opérateur de soutenir l'arbre 32, ainsi que les deux bras 40 et 60, à l'encontre de la gravité. A titre de variante non représentée, on peut prévoir que le système de freinage décrit ci-dessus est incorporé, non pas en partie basse du bâti, mais dans une zone intermédiaire située par exemple entre les deux douilles 18 et 28.

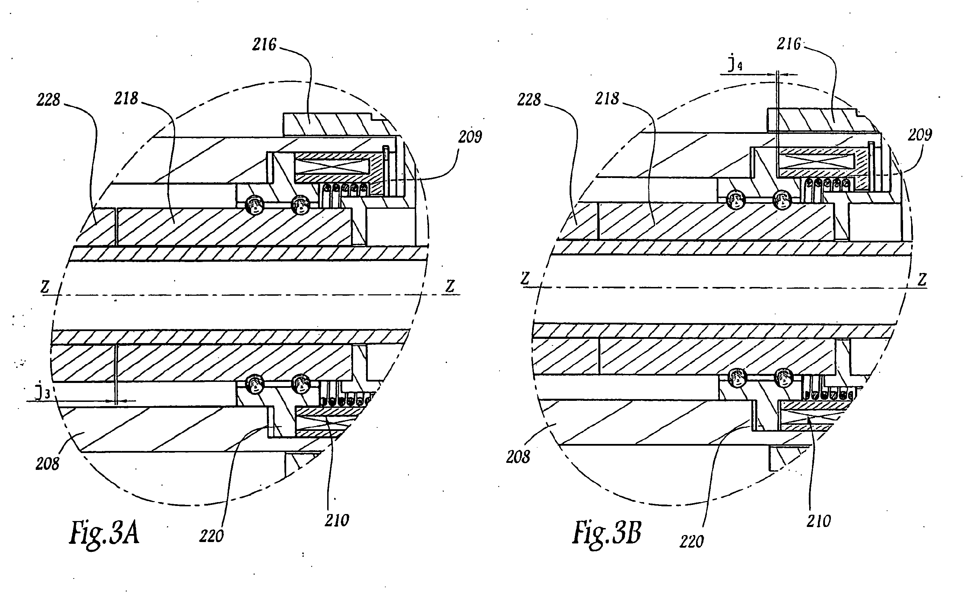

Une variante supplémentaire des moyens de freinage, explicités ci-dessus, va maintenant être décrite en référence aux figures 3, 3A et 3B. Sur ces figures, les éléments mécaniques analogues à ceux de la figure 1 y sont affectés des mêmes numéros de référence, augmentés de 200.

Dans cette variante, on retrouve un corps 206, solidaire du bâti, dans lequel est reçue une bobine électromagnétique 210. La douille glissière 218, ainsi que sa couronne dentée 216 et son palier de guidage 220 diffèrent de ceux 16, 18 et 20 décrits à la figure 1, en ce qu'ils sont susceptibles de se déplacer en translation selon l'axe Z. Un tel déplacement présente une faible amplitude, de l'ordre de quelques dixièmes de millimètres. A cet effet, le palier de guidage 220 est monté dans le pied 208 avec un ajustement glissement, autorisant le déplacement précité tout en ne perturbant pas le guidage de l'arbre de pivotement du premier bras 40, afin de ne pas affecter la précision en bout de bras de la structure de robot.

En service normal, comme le montre à plus grande échelle la figure 3A, la bobine 210 est activée de sorte qu'elle attire le palier 220, réalisé en matériau approprié, à l'encontre d'un ressort de compression 209, monté autour de l'arbre 232 de façon analogue au ressort 109 décrit ci-dessus. Dans ces conditions, la douille glissière 218 est distante axialement de la douille écrou 228, en formant un jeu noté j₃, de sorte qu'elles ne sont pas liées mutuellement. Les différents mouvements de l'arbre 232, à la fois en rotation et en translation, sont donc permis.

Si l'on désire exercer une action de freinage sur cet arbre 232, il s'agit de stopper l'alimentation de la bobine 210 de sorte que le ressort 209 repousse le palier 220, ainsi que la douille 218 en direction de l'autre douille 228. On note j₄ le jeu ainsi créé entre la bobine 210 et le palier 220. Ceci n'a cependant aucune incidence sur la position axiale de l'arbre 232, puisque cette douille glissière 218 est libre en translation par rapport à cet arbre.

Au terme de ce mouvement, comme cela est illustré à la figure 3B, la douille glissière 218 vient au contact de la douille écrou 228, de sorte qu'elle en est désormais solidaire en rotation du fait de la friction ainsi générée. Dans ces conditions, ces deux douilles 218 et 228 sont nécessairement entraînées en rotation, dans le même sens et à la même vitesse angulaire. Or, comme on l'a vu ci-dessus, ceci implique que le seul mouvement possible de l'arbre 232 est une rotation autour de l'axe Z, toute translation selon ce même axe Z étant interdite.

On notera également que, en cas de coupure intempestive de l'alimentation électrique, les deux douilles 218 et 228 viennent en contact mutuel, ce qui induit leur solidarisation. Ceci est avantageux en termes de sécurité puisque, dans l'occurrence d'une panne, l'arbre principal et les deux bras de la structure ne retombent pas sous l'effet de la gravité.

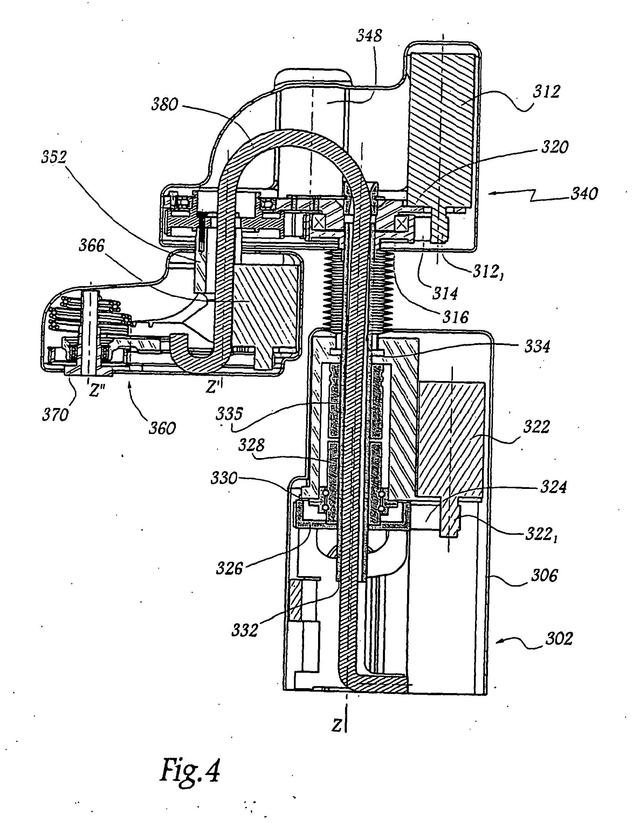

La figure 4 illustre une variante de réalisation de l'invention. Sur cette figure, les éléments mécaniques analogues à ceux de la figure 1 sont affectés des mêmes numéros de référence, augmentés de 300.

Le mode de réalisation de cette figure 4 diffère de celui des figures précédentes, notamment en ce que le bâti 302 est pourvu d'un seul moteur 322, de même structure que celui 22 de la figure 1. Ce moteur 322, qui possède un axe rotatif 322₁, est associé à une courroie 324, à une couronne dentée 326, à une douille écrou 328, ainsi qu'à un palier 330.

Ce second mode de réalisation diffère en outre du premier mode, en ce que l'arbre 332 est solidaire du premier bras 340 uniquement en translation selon l'axe Z. Ainsi, ce premier bras 340 est propre à pivoter par rapport à cet arbre 332 autour de cet axe Z.

A cet effet, ce premier bras 340 est pourvu d'un moteur 312, de même structure que celui 12 équipant le bâti 2 de la figure 1. Ce moteur 312, qui possède un axe rotatif 312₁, est associé à une courroie 314, qui est propre à engrener avec une couronne dentée 316, solidaire de l'arbre 332. On retrouve par ailleurs un palier 320, équipant ce premier bras 340, qui guide la rotation de ce premier bras 340 par rapport à l'arbre 332 désormais fixe en rotation.

On notera également que, au voisinage de l'ouverture supérieure 334, le bâti 302 est pourvu d'une glissière à billes 335, de type connu en soi, qui est solidaire de ce bâti. Cette dernière, qui est destinée à empêcher la rotation de l'arbre 332 autour de l'axe Z, est pourvue de billes non représentées, qui sont propres à pénétrer dans la ou chaque rainure longitudinale de l'arbre 332. Ces rainures longitudinales, analogues à celle 36 de la figure 2, ne sont pas représentées sur la figure 4.

On notera en outre que le second bras 360 et l'organe de réception de l'outil 370 sont analogues à ceux décrits en référence au premier mode de réalisation. De façon similaire, on retrouve les mêmes éléments mécaniques, assurant la mise en rotation de ce second bras 360 par rapport au premier bras 340, ainsi que de l'organe de réception de l'outil 370 par rapport à ce second bras 360.

Il est en particulier prévu un moteur 348, destiné à entraîner le second bras 360 en rotation autour de l'axe Z'. Il est à souligner que ce moteur 348 et le moteur 312, destiné à entraîner la rotation du premier bras 340 autour de l'axe Z, sont disposés de part et d'autre de l'arbre 332. Cette mesure est avantageuse, étant donné qu'elle permet d'équilibrer la structure générale du premier bras 340.

Le fonctionnement de la structure de robot, décrite en référence à la figure 4, est le suivant. Le moteur 322 est propre à entraîner la douille 328, de manière à impartir un mouvement de translation, selon l'axe Z, à l'arbre 332. On rappellera que, du fait de la présence de la glissière 335, toute rotation de cet arbre 332 par rapport au bâti 302 est empêchée.

De plus, lorsqu'on actionne le moteur 312, ce dernier coopère, via la courroie 314, avec la couronne dentée 316. Etant donné que cette dernière est solidaire de l'arbre 332, lui-même lié en rotation par rapport au bâti, le moteur 312 est alors astreint à pivoter par rapport à l'arbre 332, ce qui induit la rotation correspondante du premier bras 340 autour de cet arbre 332. Enfin, le freinage de l'arbre, à l'égard d'une translation selon l'axe Z, est opéré en agissant directement sur le moteur 322, à savoir en arrêtant ce dernier.

L'invention n'est pas limitée aux exemples décrits et représentés.

Ainsi, dans les deux modes de réalisation illustrés, l'axe Z est considéré comme étant la direction de la pesanteur. Cependant, on peut prévoir qu'il s'agit d'un autre axe pris dans l'espace, tout comme pour les autres axes Z' et Z". De façon similaire, les différents axes rotatifs des moteurs pourraient ne pas s'étendre de façon verticale, contrairement aux modes de réalisation des exemples illustrés.

Dans le premier mode de réalisation, la position des deux douilles 18 et 28 pourrait être interchangée, sans modifier le principe de fonctionnement de la structure de robot conforme à l'invention.

Dans les deux exemples de réalisation, le premier bras 40 ou 340 est disposé au-dessus du second bras 60 ou 360. Cependant, à titre de variante, ce second bras peut être placé au-dessus de ce premier bras.

Dans les exemples illustrés, l'évidement de l'arbre creux s'étend de manière centrale, à savoir que, en d'autres termes, l'axe principal de cet évidement correspond à celui de l'arbre. Cependant, cet évidement pourrait être excentré, à savoir que les parois de cet arbre pourraient être de nature dissymétrique.

A titre de variante supplémentaire, non représentée, on peut prévoir que le premier bras est pourvu des deux moteurs assurant sa mise en mouvement par rapport à l'arbre creux. Dans ce cas, ce dernier est entièrement solidaire du bâti, à la fois en translation et en rotation. En service, les deux moteurs précités, solidaires du premier bras, sont alors propres à se déplacer en translation et en rotation par rapport à l'arbre fixe, de manière à impartir les mouvements de ce premier bras par rapport au bâti.

De façon plus précise, dans ce troisième mode de réalisation, le premier bras est pourvu des deux moteurs précités, ainsi que de deux douilles similaires à celles équipant le bâti du premier mode de réalisation. En service, si l'on désire déplacer en translation pure le premier bras par rapport à l'arbre fixe et, par conséquent, par rapport au bâti, il s'agit d'entraîner le moteur associé à la douille écrou, bloquée en translation par rapport au premier bras, alors que l'autre moteur est bloqué en position.

En revanche, si l'on désire conférer un mouvement de rotation pure, on actionne le moteur associé à la douille glissière, qui est bloquée en rotation du fait de sa liaison glissière avec l'arbre, lui-même bloqué en rotation. Par conséquent, ce moteur entre en rotation autour de cette douille glissière, tout comme le premier bras solidaire du moteur précité.

On notera que dans ce cas, comme dans le premier mode de réalisation, le moteur associé à la douille écrou doit être actionné, de manière à ce que cette douille ne tourne pas par rapport à l'arbre fixe. Enfin, de manière similaire au premier mode de réalisation, il s'agit d'actionner les deux moteurs en vue d'obtenir un mouvement combiné de translation et de rotation du premier bras par rapport au bâti.

On notera également que ce troisième mode de réalisation est susceptible d'intégrer des moyens de freinage, à l'encontre d'une translation de l'arbre creux selon son axe principal. Dans ce cas, ces moyens de freinage sont analogues à ceux décrits et représentés en référence au premier mode de réalisation.

A titre de variante supplémentaire, également non représentée, le moteur permettant la rotation de l'organe de réception de l'outil, par rapport au second bras, pourrait être intégré au premier bras. Dans cette optique, on prévoit alors un système de transmission, s'étendant du premier bras vers le second bras, tout en passant par exemple par l'arbre supplémentaire creux reliant ces deux bras.

Dans les différents exemples, la structure de robot de l'invention fait intervenir deux bras, ainsi qu'un organe de réception de l'outil mobile par rapport au second bras. Cependant, à titre de variante, on peut prévoir de faire appel à un unique bras, ou bien encore prévoir que l'outil est fixe par rapport au second bras.

L'invention permet d'atteindre les objectifs précédemment mentionnés.

L'invention fait appel à un organe creux qui assure une double fonction, à savoir d'une part la protection du harnais de fils d'alimentation et, d'autre part, le déplacement du premier bras par rapport au bâti. Ceci assure par conséquent une simplification de la structure globale du robot, tout en conférant une protection satisfaisante à ce harnais.

Dans ces conditions, l'invention est tout d'abord avantageuse, dans la mesure où elle tire parti d'un nombre relativement réduit de moteurs embarqués. Ces derniers, qui sont solidaires des parties mobiles de la structure de robot, sont en effet de nature à pénaliser les performances de ce robot, en particulier dans le cas où ils sont fixés sur le second bras. Cette caractéristique avantageuse est tout particulièrement notable dans le cas du premier mode de réalisation.

La diminution du nombre de ces moteurs embarqués présente des avantages spécifiques, puisqu'elle autorise une inertie peu élevée des différents bras. Cette diminution de l'inertie autorise des accélérations supérieures et, par conséquent, des déplacements plus rapides et plus performants de l'ensemble de la structure de robot.

De plus, la présence d'un nombre restreint de moteurs embarqués garantit une diminution du nombre de câbles en mouvement. Par ailleurs, ceci s'accompagne d'une réduction du diamètre de la gaine du harnais, qui autorise une courbure plus prononcée de celui-ci.

En outre, cet organe de déplacement creux permet de protéger le harnais à l'égard des agressions extérieures, puisque ce harnais s'étend dans le volume intérieur global de la structure de robot. Dans ces conditions, l'invention présente un avantage supplémentaire, notamment par rapport à l'enseignement de EP-A-1 525 957.

Ceci permet également de maîtriser l'encombrement de ce harnais, puisque cet encombrement n'est pas susceptible de varier avec les mouvements du robot, ce qui est avantageux par rapport aux structures de l'état de la technique. Enfin, le passage par l'évidement central de cet arbre permet de minimiser les sollicitations sur le harnais, en service.

La structure de robot de l'invention possède une aire de travail de dimension importante, en particulier en comparaison avec l'enseignement de US-A-6,199,444. En effet, l'agencement de l'invention s'affranchit de la présence d'une colonne intermédiaire, susceptible de restreindre les dimensions de cette aire de travail. On notera que, dans le cas où les dimensions de l'arbre creux de déplacement permettent de disposer le second bras au-dessus du pied, le pivotement du premier bras est susceptible de s'opérer sur 360°, ce qui permet d'agrandir encore cette aire de travail.

## Revendications

1. Structure de robot de type SCARA, comprenant un bâti (2 ; 302), au moins un premier bras (40 ; 340) mobile par rapport à ce bâti, à la fois en translation selon un axe de déplacement (Z) et en rotation autour de ce même axe (Z), des moyens de déplacement (12, 22, 32 ; 312, 322, 332) de ce premier bras par rapport au bâti, un organe de réception (70 ; 370), en particulier une bride ou une broche, d'un outil (72), notamment une pince de préhension ou un outil de meulage, cet organe de réception de l'outil étant mobile par rapport au premier bras (40 ; 340), ainsi qu'un ensemble d'alimentation (80 ; 380), en particulier de type électrique et/ou pneumatique, des éléments auxiliaires (48, 66, 72 ; 312, 348, 366) de ladite structure de robot, une extrémité dudit ensemble d'alimentation étant placée au voisinage de l'organe de réception de l'outil, les moyens de déplacement comprenant un organe de déplacement creux (32 ; 332), qui est mobile en translation selon ledit axe de déplacement (Z) par rapport à l'un parmi le bâti (2 ; 302) et le premier bras (40 ; 340), et solidaire en translation par rapport à l'autre parmi le bâti et le premier bras, cet organe de déplacement creux (32 ; 332) étant mobile en rotation, autour de l'axe de déplacement, par rapport à l'un parmi le bâti (2 ; 302) et le premier bras (40 ; 340), tout en étant solitaire en rotation de l'autre parmi le bâti et le premier bras, l'ensemble d'alimentation (80 ; 380) s'étendant, depuis le bâti vers le premier bras, au travers dudit organe de déplacement creux (32 ; 332),
les moyens de déplacement (12, 22, 32 ; 312, 322, 332) comprenant en outre des moyens moteurs (12, 22 ; 312, 322) propres à engrener avec l'organe de déplacement creux (32 ; 332) en vue de sa mise en mouvement par rapport au bâti (2 ; 302) et/ou au premier bras (40 ; 340), ces moyens moteurs comprenant un premier moteur (22) propre à coopérer avec une première douille (28 ; 28) mobile en rotation par rapport au bâti (2) autour de l'axe de déplacement (Z) mais sensiblement liée en translation à ce bâti, ou mobile en rotation par rapport au premier bras autour de l'axe de déplacement mais sensiblement liée en translation à ce premier bras, cette première douille étant pourvue d'organes de prise, en particulier de roulement, disposés de manière hélicoïdale autour de l'axe de déplacement (Z), **caractérisé en ce que** lesdits organes de prise sont propres à coopérer avec au moins une rainure hélicoïdale ménagée sur l'organe de déplacement creux (32).

2. Structure selon la revendication 1, **caractérisée en ce que** l'organe de déplacement creux (32 ; 332) est solidaire du premier bras (40 ; 340) en translation, alors qu'il est mobile par rapport au bâti (2 ; 302) en translation selon l'axe de déplacement (Z), la première douille étant mobile en rotation par rapport au bâti mais sensiblement liée en translation à ce bâti.

3. Structure selon la revendication 2, **caractérisée en ce que** l'organe de déplacement creux (32) est solidaire du premier bras (40) en rotation, en étant mobile par rapport au bâti (2) en rotation autour de l'axe de déplacement (Z).

4. Structure selon la revendication 3, **caractérisée en ce que** les moyens moteurs (12, 22) sont propres à mettre en mouvement l'organe de déplacement creux (32) par rapport au bâti (2), à la fois en translation et en rotation.

5. Structure selon la revendication 4, **caractérisée en ce que** les moyens moteurs comprennent deux moteurs (12, 22) solidaire du bâti.

6. Structure selon la revendication 5, **caractérisée en ce qu'**il est en outre prévu un second moteur (12) propre à coopérer avec une seconde douille (18 ; 218), mobile par rapport au bâti (2) en rotation autour de l'axe de déplacement (Z), mais sensiblement liée en translation à ce bâti, cette seconde douille étant munie d'organes de prise, en particulier de roulement, disposés axialement, qui sont propres à coopérer avec au moins une rainure longitudinale de l'organe de déplacement (32).

7. Structure selon l'une des revendications 3 à 6, **caractérisée en ce que** cette structure comprend des moyens (209, 210) de freinage de l'organe de déplacement (32), propres à empêcher la translation de cet organe de déplacement par rapport au bâti (2), selon l'axe de déplacement (Z), sans cependant empêcher la rotation de cet organe de déplacement par rapport au bâti, autour de cet axe de déplacement.

8. Structure selon les revendications 6 et 7, **caractérisée en ce que** les moyens de freinage comprennent des moyens (209, 210) de solidarisation sélective des première et deuxième douilles (228, 218).

9. Structure selon la revendication 8, **caractérisée en ce que** les moyens de solidarisation sélective des première et seconde douilles comprennent un organe électromagnétique (210), tel qu'une bobine, propre à attirer l'une (218, 228) desdites douilles à l'opposé de l'autre (228, 218) de ces douilles, de façon à les désolidariser, ainsi qu'un ressort de rappel (209), propre à repousser cette douille contre l'autre douille, en l'absence d'action dudit organe électromagnétique, de manière à solidariser ces deux douilles.

10. Structure selon la revendication 7, **caractérisée en ce que** les moyens de freinage comprennent un organe de blocage (118) de l'organe de déplacement (32), cet organe de blocage possédant une position de déblocage, dans laquelle il n'est pas solidaire de l'organe de déplacement, ainsi qu'une position de blocage, dans laquelle il est solidaire de l'organe de déplacement (32), tout en étant immobilisé en translation par rapport au bâti, mais cependant libre en rotation par rapport au bâti autour de l'axe de déplacement (Z).

11. Structure selon la revendication 10, **caractérisée en ce que** l'organe de blocage est une bague fendue (118), s'étendant autour de l'organe de déplacement creux (32), cette bague fendue possédant deux surfaces inclinées (118', 118") propres à coopérer, de façon sélective, avec des surfaces inclinées (104', 116') appartenant à deux bagues auxiliaires (104, 116), propres à comprimer axialement cette bague fendue dans sa position de blocage, de façon à la resserrer également radialement autour de l'organe de déplacement (32).

12. Structure selon la revendication 2, **caractérisée en ce que** l'organe de déplacement (332) est solidaire en rotation par rapport au bâti (302), alors que le premier bras (340) est mobile en rotation par rapport à cet organe de déplacement autour de l'axe de déplacement (Z).

13. Structure selon la revendication 12, **caractérisée en ce que** les moyens moteurs (312, 322) comprennent ledit premier moteur (322), qui est solidaire du bâti (302), et qui est propre à mettre en mouvement en translation l'organe de déplacement (332) par rapport au bâti, ainsi qu'un second moteur (312), solidaire du premier bras (340), propre à mettre en mouvement le premier bras en rotation par rapport à l'organe de déplacement, autour dudit axe de déplacement.

14. Structure selon la revendication 1, **caractérisée en ce que** l'organe de déplacement creux est solidaire du bâti, à la fois en translation et en rotation, et le premier bras est mobile par rapport à cet organe de déplacement creux à la fois en translation et en rotation, la première douille étant mobile en rotation par rapport au premier bras mais sensiblement liée en translation à ce premier bras.

15. Structure selon la revendication 14, **caractérisée en ce que** les moyens moteurs comprennent ledit premier moteur et un second moteur, tous deux solidaires du premier bras, qui sont mobiles par rapport à l'organe de déplacement creux de façon à assurer le déplacement en translation et en rotation de ce premier bras par rapport à cet organe de déplacement creux.

16. Structure selon l'une quelconque des revendications précédentes, **caractérisée en ce que** l'organe de déplacement creux (32 ; 332) possède un axe principal (Z), qui est confondu avec l'axe de déplacement.

17. Structure selon l'une quelconque des revendications précédentes, **caractérisée en ce que** cette structure comprend également un second bras (60 ; 360), supportant l'organe de réception (70 ; 370) de l'outil, ce second bras étant mobile en rotation par rapport au premier bras (40 ; 340), un organe de déplacement supplémentaire (52 ; 352) creux assurant la liaison entre ce premier et ce second bras, alors que l'ensemble d'alimentation (80 ; 380) des éléments auxiliaires (48, 66, 72 ; 312, 348, 366) s'étend à l'intérieur de l'organe de déplacement supplémentaire creux, depuis le premier bras vers le second bras.

18. Structure selon l'une quelconque des revendications précédentes, **caractérisée en ce que** le bâti (2 ; 302) et le premier bras (40 ; 340) forment des enceintes globalement fermées respectives, alors que l'organe de déplacement creux (32 ; 332) possède une première extrémité qui débouche dans le volume intérieur du bâti, ainsi qu'une seconde extrémité qui débouche dans le volume intérieur du premier bras.

19. Structure selon les revendications 17 et 18, **caractérisée en ce que** le second bras (60 ; 360) forme une autre enceinte globalement fermée, alors que l'organe de déplacement supplémentaire creux (52 ; 352) possède une première extrémité qui débouche dans le volume intérieur du premier bras, ainsi qu'une seconde extrémité qui débouche dans le volume intérieur du second bras.

20. Structure selon l'une quelconque des revendications précédentes, **caractérisée en ce que** l'organe de réception (70 ; 370) de l'outil (72) est intégré dans le volume intérieur d'un bras (60 ; 360) de ladite structure de robot.

21. Structure selon la revendication 20, **caractérisée en ce que** l'organe de réception (70 ; 370) de l'outil est creusé d'une ouverture de passage (83), propre à mettre en communication l'ensemble d'alimentation (80 ; 380) avec l'outil (72), cette ouverture de passage étant également intégrée dans le volume intérieur du bras (60 ; 360).

22. Robot de type SCARA, qui comprend une structure conforme à l'une quelconque des revendications précédentes, ainsi qu'au moins un outil (72) propre à être rapporté, de façon amovible, sur l'organe de réception (70 ; 370) de l'outil.

## Claims

1. SCARA-type robot structure, comprising a base structure (2; 302), at least a first arm (40; 340) that can move with respect to this base structure, both in terms of translation along an axis of motion (Z) and in terms of rotation about this same axis (Z), movement means (12, 22, 32; 312, 322, 332) for moving this first arm with respect to the base structure, an accepting member (70; 370), particularly a flange or a spindle, for accepting a tool (72), especially a gripper or a grinding tool, this tool accepting member being able to move with respect to the first arm (40; 340), and a power supply assembly (80; 380), particularly of the electrical and/or pneumatic type, for powering the auxiliary elements (48, 66, 72; 312, 348, 366) of the said robot structure, one end of the said power supply assembly being placed near the tool accepting member,the movement means comprising a hollow movement member (32; 332) which is able to move in terms of translation along the said axis of motion (Z) with respect to one of either the base structure (2; 302) or the first arm (40; 340), and is incapable of translational movement independently of the other of either the base structure or the first arm, this hollow movement member (32; 332) being able to move in terms of rotation about the axis of motion with respect to one of either the base structure (2; 302) or the first arm (40; 340), while at the same time being incapable of rotational movement independently of the other of either the base structure or the first arm, and in that the power supply assembly (80; 380) extends, from the base structure towards the first arm, through the said hollow movement member (32; 332), the movement means (12, 22, 32; 312, 322, 332) further comprising drive means (12, 22; 312, 322) able to engage with the hollow movement member (32; 332) with a view to moving the hollow movement member (32; 332) in terms of translation and in terms of rotation with respect to the base structure (2; 302) and/or to the first arm (40; 340), the drive means comprising a first motor (22) able to collaborate with a first bushing (28; 228) that is able to move in terms of rotation with respect to the base structure (2) about the axis of motion (Z) but is substantially bound to this base structure in terms of translation, or being able to move in terms of rotation with respect to the first arm (40; 340) about the axis of motion (Z) while at the same time being substantially bound to this first arm in terms of translation, this first bushing being provided with engaging, particularly rolling members, arranged in a helix about the axis of motion (Z), **characterized in that** said engaging members are able to collaborate with at least one helical slot formed on the hollow movement member (32).

2. Structure according to Claim 1, **characterized in that** the hollow movement member (32; 332) is incapable of translational movement independently of the first arm (40; 340), whereas it is able to move with respect to the base structure (2; 302) in terms of translation along the axis of motion (Z), the first bushing (18; 218) being able to move with respect to the base structure (2) in terms of rotation but is substantially bound to this base structure in terms of translation.

3. Structure according to Claim 2, **characterized in that** the hollow movement member (32) is unable to rotate independently of the first arm (40), but is able to move with respect to the base structure (2) in terms of rotation about the axis of motion (Z).

4. Structure according to Claim 3, **characterized in that** the drive means (12, 22) are able to set the hollow movement member (32) in motion with respect to the base structure (2) both in terms of translation and in terms of rotation.

5. Structure according to Claim 4, **characterized in that** the drive means comprise two motors (12, 22) secured to the base structure.

6. Structure according to Claim 5, **characterized in that** the structure further comprises a second motor (12) able to collaborate with a second bushing (18; 218) that is able to move with respect to the base structure (2) in terms of rotation about the axis of motion (Z) but is substantially bound to this base structure in terms of translation, this second bushing being equipped with engaging, particularly rolling members, arranged axially, which are able to collaborate with at least one longitudinal slot belonging to the movement member (32).

7. Structure according to one of Claims 3 to 6, **characterized in that** this structure comprises braking means (209, 210) for braking the movement member (32), these being able to prevent the translation movement of this movement member with respect to the base structure (2), along the axis of motion (Z) without, however, preventing this movement member from rotating with respect to the base structure about this axis of motion.

8. Structure according to Claims 6 and 7, **characterized in that** the braking means comprise means (209, 210) for selectively binding the first and second bushings (218, 228).

9. Structure according to Claim 8, **characterized in that** the means for selectively binding the first and second bushings comprise an electromagnetic member (210), such as a coil, able to attract one (218, 228) of the said bushings away from the other (228, 218) of these bushings, so as to disconnect them, and a return spring (209) able to push this bushing back against the other bushing, when the said electromagnetic member is not acting, so as to connect these two bushings together.

10. Structure according to Claim 7, **characterized in that** the braking means comprise a blocking member (118) for blocking the movement member (32), this blocking member having an unblocking position in which it is not bound to the movement member, and a blocking position in which it is bound to the movement member (32), while at the same time being immobilized in terms of translation with respect to the base structure although free to rotate with respect to the base structure about the axis of motion (Z).

11. Structure according to Claim 10, **characterized in that** the blocking member is a split ring (118) extending around the hollow movement member (32), this split ring having two inclined surfaces (118', 118") able selectively to collaborate with inclined surfaces (104', 116') belonging to two auxiliary rings (104, 116) able to compress this split ring axially in its blocking position so as also to tighten it radially around the movement member (32).

12. Structure according to Claim 2, **characterized in that** the movement member (332) is incapable of rotational movement independently of the base structure (302), whereas the first arm (340) is able to move in terms of rotation with respect to this movement member about the axis of motion (Z).

13. Structure according to Claims 12, **characterized in that** the drive means (312, 322) comprise said first motor (322) which is secured to the base structure (302) and able to set the movement member (332) in translational movement with respect to the base structure, and a second motor (312) , secured to the first arm (340) and able to set the first arm in rotational movement with respect to the movement member, about the said axis of motion.

14. Structure according to Claim 1, **characterized in that** the hollow movement member is incapable either of translational or of rotational movement independently of the base structure, and the first arm is able to move with respect to this hollow movement member both in terms of translation and in terms of rotation, the first bushing being able to move in terms of rotation with respect to the first arm but being substantially bound to this first arm in term of translation.

15. Structure according to Claims 14, **characterized in that** the drive means comprise said first motor and a second motor, both secured to the first arm, which are able to move with respect to the hollow movement member so as to provide for the translational and rotational movement of this first arm with respect to this hollow movement member.

16. Structure according to any one of the preceding claims, **characterized in that** the hollow movement member (32; 332) has a main axis (Z) which coincides with the axis of motion.

17. Structure according to any one of the preceding claims, **characterized in that** this structure also comprises a second arm (60; 360) supporting the tool accepting member (70; 370), this second arm being able to move in terms of rotation with respect to the first arm (40; 340), an additional hollow movement member (52; 352) providing the connection between this first arm and this second arm, while the power supply assembly (80; 380) for supplying power to the auxiliary elements (48, 66, 72; 312, 348, 366) extends inside the additional hollow movement member, from the first arm towards the second arm.

18. Structure according to any one of the preceding claims, **characterized in that** the base structure (2; 302) and the first arm (40; 340) form respective more-or-less enclosed spaces, whereas the hollow movement member (32; 332) has a first end which opens into the interior volume of the base structure, and a second end which opens into the interior volume of the first arm.

19. Structure according to Claims 17 and 18, **characterized in that** the second arm (60; 360) forms another more-or-less enclosed space, whereas the additional hollow movement member (52; 352) has a first end which opens into the interior volume of the first arm, and a second end which opens into the interior volume of the second arm.

20. Structure according to any one of the preceding claims, **characterized in that** the tool accepting member (70; 370) for accepting the tool (72) is incorporated into the interior volume of an arm (60; 360) of the said robot structure.

21. Structure according to Claim 20, **characterized in that** the tool accepting member (70; 370) is provided with a passage opening (83) able to place the power supply assembly (80; 380) in communication with the tool (72), this passage opening also being incorporated into the interior volume of the arm (60; 360).

22. SCARA-type robot which comprises a structure according to any one of the preceding claims, and at least one tool (72) which can be attached, removably, to the tool accepting member (70; 370).

## Patentansprüche

1. Aufbau eines SCARA-Roboters, der ein Gestell (2; 302), mindestens einen in Bezug auf dieses Gestell sowohl translatorisch gemäß einer Verschiebungsachse (Z) als auch rotatorisch um diese selbe Achse (Z) beweglichen ersten Arm (40; 340), Mittel zur Bewegung (12, 22, 32; 312, 322, 332) dieses ersten Arms in Bezug auf das Gestell, ein Organ zur Aufnahme (70; 370), insbesondere ein Flansch oder ein Zapfen, eines Werkzeugs (72), namentlich eine Greiferzange oder ein Schleifwerkzeug, wobei dieses Organ zur Aufnahme des Werkzeugs in Bezug auf den ersten Arm (40; 340) beweglich ist, sowie eine Versorgungsanordnung (80; 380), insbesondere elektrischer und/oder pneumatischer Art und Hilfselemente (48, 66, 72; 312, 348, 366) des Roboteraufbaus umfasst, wobei ein Ende der Versorgungsanordnung in der Nähe des Organs zur Aufnahme des Werkzeugs angeordnet ist, die Bewegungsmittel ein hohles Bewegungsorgan (32; 332) aufweisen, das translatorisch gemäß der Verschiebungsachse (Z) in Bezug auf eines der Elemente Gestell (2; 302) und erster Arm (40; 340) beweglich ist und translatorisch in Bezug auf das andere der Elemente Gestell und erster Arm fest ist, wobei dieses hohle Bewegungsorgan (32; 332) rotatorisch um die Verschiebungsachse in Bezug auf eines der Elemente Gestell (2; 302) und erster Arm (40; 340) ist und dabei rotatorisch fest in Bezug auf das andere der Elemente Gestell und erster Arm ist, wobei die Versorgungsanordnung (80; 380) sich von dem Gestell zu dem ersten Arm durch das hohle Bewegungsorgan (32; 332) erstreckt,
wobei die Bewegungsmittel (12, 22, 32; 312, 322, 332) darüber hinaus Motormittel (12, 22; 312, 322) aufweisen, die geeignet sind, mit dem hohlen Bewegungsorgan (32; 332) in Eingriff zu treten in Hinblick auf sein Inbewegungversetzen in Bezug auf das Gestell (2; 302) und/oder den ersten Arm (40; 340), wobei diese Motormittel einen ersten Motor (22), der geeignet ist, mit einer ersten Hülse (28; 228) zusammenzuarbeiten, die rotatorisch in Bezug auf das Gestell (2) um die Verschiebungsachse (Z) beweglich ist aber im Wesentlichen translatorisch an dieses Gestell gebunden ist, oder rotatorisch bezüglich des ersten Arms um die Verschiebungsachse beweglich ist, aber im Wesentlichen translatorisch an diesen ersten Arm gebunden ist, wobei diese erste Hülse mit Mit-nehmerorganen, insbesondere Rollenorganen versehen ist, die in schraubenförmiger Weise um die Verschiebungsachse (Z) angeordnet sind, **dadurch gekennzeichnet, dass** die Mitnehmerorgane geeignet sind, mit mindestens einer schraubenförmigen Nut zusammenzuarbeiten, die in dem hohlen Bewegungsorgan (32) eingearbeitet ist.

2. Aufbau nach Anspruch 1, **dadurch gekennzeichnet, dass** das hohle Bewegungsorgan (32; 332) mit dem ersten Arm (40; 340) translatorisch verbunden ist, während es in Bezug auf das Gestell (2; 302) translatorisch gemäß der Verschiebungsachse (Z) beweglich ist, wobei die erste Hülse rotatorisch in Bezug auf das Gestell beweglich ist, aber translatorisch im Wesentlichen an dieses Gestell gebunden ist.

3. Aufbau nach Anspruch 2, **dadurch gekennzeichnet, dass** das hohle Bewegungsorgan (32) rotatorisch mit dem ersten Arm (40) verbunden ist, wobei es dabei in Bezug auf das Gestell (2) rotatorisch um die Verschiebungsachse (Z) beweglich ist.

4. Aufbau nach Anspruch 3, **dadurch gekennzeichnet, dass** die Motormittel (12, 22) geeignet sind, das hohle Bewegungsorgan (32) in Bezug auf das Gestell (2) sowohl translatorisch als auch rotatorisch in Bewegung zu versetzen.

5. Aufbau nach Anspruch 4, **dadurch gekennzeichnet, dass** die Motormittel zwei Motoren (12, 22) umfassen, die mit dem Gestell verbunden sind.

6. Aufbau nach Anspruch 5, **dadurch gekennzeichnet, dass** darüber hinaus ein zweiter Motor (12) vorgesehen ist, der geeignet ist, mit einer zweiten Hülse (18; 218) zusammenzuarbeiten, die rotatorisch in Bezug auf das Gestell (2) um die Verschiebungsachse (Z) beweglich ist, aber im Wesentlichen translatorisch an dieses Gestell gebunden ist, wobei diese zweite Hülse mit Mit-nehmerorganen, insbesondere Rollenorganen, ausgerüstet ist, die axial angeordnet sind und geeignet sind, mit mindestens einer Längsnut des Bewegungsorgans (32) zusammenzuarbeiten.

7. Aufbau nach einem der Ansprüche 3 bis 6, **dadurch gekennzeichnet, dass** dieser Aufbau Mittel (209, 210) zum Bremsen des Bewegungsorgans (2) umfasst, die geeignet sind, die Längsbewegung dieses Bewegungsorgans in Bezug auf das Gestell (2) gemäß der Verschiebungsachse (Z) zu verhindern, ohne jedoch die Rotation dieses Bewegungsorgans in Bezug auf das Gestell um diese Verschiebungsachse zu unterbinden.

8. Aufbau nach den Ansprüchen 6 und 7, **dadurch gekennzeichnet, dass** die Bremsmittel Mittel (209, 210) zur selektiven Verbindung der ersten und der zweiten Hülse (228, 218) umfassen.

9. Aufbau nach Anspruch 8, **dadurch gekennzeichnet, dass** die Mittel zum selektiven Verbinden der ersten und der zweiten Hülse ein elektromagnetisches Organ (210), wie eine Spule, das geeignet ist, eine (218, 228) der Hülsen entgegengesetzt zur anderen (228, 218) dieser Hülsen anzuziehen, um sie voneinander zu lösen, sowie eine Rückstellfeder (209) umfassen, die geeignet ist, diese Hülse gegen die andere Hülse in Abwesenheit der Wirkung des elektromagnetischen Organs zurückzudrücken, um diese zwei Hülsen zu verbinden.

10. Aufbau nach Anspruch 7, **dadurch gekennzeichnet, dass** die Bremsmittel ein Organ (118) zum Blockieren des Bewegungsorgans (32) umfassen, wobei dieses Blockierungsorgan eine Freigabeposition, in der es nicht mit dem Bewegungsorgan verbunden ist, sowie eine Blockierposition besitzt, in der es mit dem Bewegungsorgan (32) verbunden ist, wobei es dabei translatorisch in Bezug auf das Gestell festgelegt ist, aber jedoch rotatorisch in Bezug auf das Gestell um die Verschiebungsachse (Z) frei ist.

11. Aufbau nach Anspruch 10, **dadurch gekennzeichnet, dass** das Blockierungsorgan ein gespaltener Ring (118) ist, der sich um das hohle Bewegungsorgan (32) erstreckt, wobei dieser gespaltene Ring zwei geneigte Oberflächen (118', 118") besitzt, die geeignet sind, in selektiver Weise mit geneigten Flächen (104', 116') zusammenzuarbeiten, die zu zwei Hilfsringen (104, 116) gehören, die geeignet sind, axial diesen gespaltenen Ring in seiner Blockierposition zu komprimieren, derart, dass er gleichfalls radial um das Bewegungsorgan (32) fester zusammengedrückt wird.

12. Aufbau nach Anspruch 2, **dadurch gekennzeichnet, dass** das Bewegungsorgan (332) rotatorisch in Bezug auf das Gestell (302) verbunden ist, während der erste Arm (340) rotatorisch in Bezug auf dieses Bewegungsorgan um die Verschiebungsachse (Z) beweglich ist.

13. Aufbau nach Anspruch 12, **dadurch gekennzeichnet, dass** die Motormittel (312, 322) den ersten Motor (322), der mit dem Gestell (302) verbunden ist und geeignet ist, das Bewegungsorgan (332) in Bezug auf das Gestell translatorisch in Bezug zu setzen, sowie einen zweiten Motor (312) umfassen, der mit dem ersten Arm (340) verbunden ist und geeignet ist, den ersten Arm in Bezug auf das Bewegungsorgan rotatorisch um die Verschiebungsachse in Bewegung zu versetzen.

14. Aufbau nach Anspruch 1, **dadurch gekennzeichnet, dass** das hohle Bewegungsorgan mit dem Gestell sowohl translatorisch als auch rotatorisch verbunden ist und der erste Arm in Bezug auf dieses hohle Bewegungsorgan sowohl translatorisch als auch rotatorisch beweglich ist, wobei die erste Hülse rotatorisch in Bezug auf den ersten Arm beweglich ist, aber im Wesentlichen translatorisch an diesen ersten Arm gebunden ist.

15. Aufbau nach Anspruch 14, **dadurch gekennzeichnet, dass** die Motormittel den ersten Motor und einen zweiten Motor umfassen, die beide mit dem ersten Arm verbunden sind und die in Bezug auf das hohle Bewegungsorgan beweglich sind, um die translatorische und rotatorische Bewegung dieses ersten Arms in Bezug auf dieses hohle Bewegungsorgan sicherzustellen.

16. Aufbau nach einem beliebigen der vorhergehenden Ansprüche, **dadurch gekennzeichnet, dass** das hohle Bewegungsorgan (32; 332) eine Hauptachse (Z) besitzt, die mit der Bewegungsachse übereinstimmt.

17. Aufbau nach einem beliebigen der vorhergehenden Ansprüche, **dadurch gekennzeichnet, dass** dieser Aufbau gleichfalls einen zweiten Arm (60; 360) umfasst, der das Organ (70; 370) zur Aufnahm des Werkzeugs trägt, wobei dieser zweite Arm rotatorisch in Bezug auf den ersten Arm (40; 340) beweglich ist und ein zusätzliches hohles Bewegungsorgan (52; 352) die Verbindung zwischen diesem ersten und diesem zweiten Arm sicherstellt, wobei die Versorgungsanordnung (80; 380) der Hilfselemente (48, 66, 72; 312, 348, 366) sich im Inneren des zusätzlichen hohlen Bewegungsorgans von dem ersten Arm zum zweiten Arm erstreckt.

18. Aufbau nach einem beliebigen der vorhergehenden Ansprüche, **dadurch gekennzeichnet, dass** das Gestell (2; 302) und der ersten Arm (40; 340) jeweils im Wesentlichen geschlossene Einfassungen bilden, während das hohle Bewegungsorgan (32; 332) ein erstes Ende, das in das innere Volumen des Gestells mündet, sowie ein zweites Ende besitzt, das in das innere Volumen des ersten Arms mündet.

19. Aufbau nach den Ansprüchen 17 und 18, **dadurch gekennzeichnet, dass** der zweite Arm (60; 360) eine andere im Wesentlichen geschlossene Einfassung bildet, während das zusätzliche hohle Bewegungsorgan (52; 352) ein erstes Ende, das in das innere Volumen des ersten Arms mündet, sowie ein zweites Ende besitzt, das in das innere Volumen des zweiten Arms mündet.

20. Aufbau nach einem beliebigen der vorhergehenden Ansprüche, **dadurch gekennzeichnet, dass** das Organ (70; 370) zur Aufnahme des Werkzeugs (72) in das innere Volumen des Arms (60; 360) des Aufbaus des Roboters integriert ist.

21. Aufbau nach Anspruch 20, **dadurch gekennzeichnet, dass** das Organ (70; 370) zur Aufnahme des Werkzeugs mit einer Durchgangsöffnung (83) ausgehöhlt ist, die geeignet ist, die Versorgungsanordnung (80; 380) mit dem Werkzeug (72) in Verbindung zu bringen, wobei diese Durchgangsöffnung gleichfalls in das innere Volumen des Arms (60; 360) integriert ist.

22. SCARA-Roboter, der einen Aufbau entsprechend einem beliebigen der vorhergehenden Ansprüche sowie mindestens ein Werkzeug (72) umfasst, das geeignet ist, in lösbarer Form an dem Organ (70; 370) zur Aufnahme eines Werkzeugs angesetzt zu werden.
